# EUROPÄISCHE PATENTSCHRIFT

(11) **EP 0 568 859 B1**
(45) Veröffentlichungstag und Bekanntmachung des Hinweises auf die Patenterteilung: **26.06.1996**
(21) Anmeldenummer: 93106449.7
(22) Anmeldetag: 21.04.1993
(51) Int. Cl.: H02B 1/044, B66B 1/46

(54) **Tableau mit werkzeuglos betätigbaren Befestigungselementen**
Cover plate with fastening elements operated without the use of tools
Plaque de recouvrement avec éléments de fixation actionnés sans outils

(30) Priorität: 04.05.1992 CH 1428/92
(43) Veröffentlichungstag der Anmeldung: 10.11.1993
(73) Patentinhaber: INVENTIO AG, CH-6052 Hergiswil NW (CH)
(72) Erfinder: Achermann, Peter, CH-6030 Ebikon (CH)

(56) Entgegenhaltungen:
- AU-A- 34 098
- DE-A- 2 419 900
- DE-A- 3 513 762
- FR-A- 2 082 120

## Beschreibung

Die Erfindung betrifft ein Tableau bestehend aus einer Deckplatte und einem aus Rändern und einem umlaufenden Flansch gebildeten Rahmen, wobei die Ränder an der Innenseite Stützen und Gegenstützen zum Tragen einer Platine aufweisen und wobei die Ränder von einer Ausnehmung einer Montageplatte aufgenommen werden und der umlaufende Flansch die Ausnehmung überdeckt und frontseitig an der Montageplatte aufliegt.

Aus dem Gebrauchsmuster DE-GM-U1 G 91 02 425.0 ist ein Tableau bestehend aus einem Gehäuse, einer Decktafel und einer Platine mit elektronischen und/oder elektromechanischen Elementen bekannt. Das Gehäuse weist einen Boden und einen Rand auf, an dem auf der Innenseite Stützen zur Halterung der Platine vorgesehen sind. Arretierleisten und Schnappkupplungen ermöglichen eine lösbare Verbindung zwischen dem Gehäuse und der Decktafel. Bei Unterputzmontage wird das Gehäuse an einer Wandplatte, beispielsweise an einem Blech befestigt. Mit Hilfe von bügelförmigen Arretiervorrichtungen, die am Boden des Gehäuses festgeschraubt werden und die sich auf die Hinterfläche des Blechs stützen, wird das Gehäuse starr im Platz zwischen den Rändern einer im Blech vorgesehenen, der Grösse des Gehäuses entsprechenden Öffnung festgehalten.

Solche Gehäuse müssen üblicherweise an Orten mit knappen Platzverhältnissen eingebaut werden, in denen ein Hantieren mit Arretiervorrichtungen und Schraubenschlüssel zur Befestigung des Gehäuses als schwerwiegender Nachteil die Montage erschwert.

Hier will die Erfindung Abhilfe schaffen. Die Erfindung, wie sie in dem Anspruch 1 gekennzeichnet ist, löst die Aufgabe, die Nachteile der bekannten Einrichtung zu vermeiden und ein Tableau zu schaffen, das mit einfachen Handgriffen und ohne Werkzeug montierbar und demontierbar ist.

Die durch die Erfindung erreichten Vorteile sind im wesentlichen darin zu sehen, dass die Halterung des Tableaus ohne Schrauben möglich ist, was wiederum eine erschütterungsunempfindliche Verbindung zwischen Tableau und Montageplatte gewährleistet. Ein weiterer Vorteil ist darin zu sehen, dass die erfindungsgemässen Befestigungselemente unterschiedlich dicke Montageplatten zulassen. Ein weiterer Vorteil ist darin zu sehen, dass Abweichungen der zur Aufnahme des Tableaus vorgesehenen Ausnehmung in der Montageplatte von den erfindungsgemässen Befestigungselementen aufgenommen werden können.

Im folgenden wird die Erfindung anhand von lediglich einen Ausführungsweg darstellenden Zeichnungen näher erläutert. Es zeigen:
- Fig. 1: eine Seitenansicht eines erfindungsgemässen auf einer Montageplatte angeordneten Tableaus,
- Fig. 2: eine Rückansicht eines eine Platine tragenden Rahmens mit Befestigungselementen,
- Fig. 3: einen Schnitt entlang der Linie A-A aus der Figur 2 mit Einzelheiten über die Führung der Befestigungselemente,
- Fig. 4: ein demontierter, als Befestigungselement dienender Riegel und
- Fig. 5: ein als Befestigungselement dienender Riegel in Montagestellung.

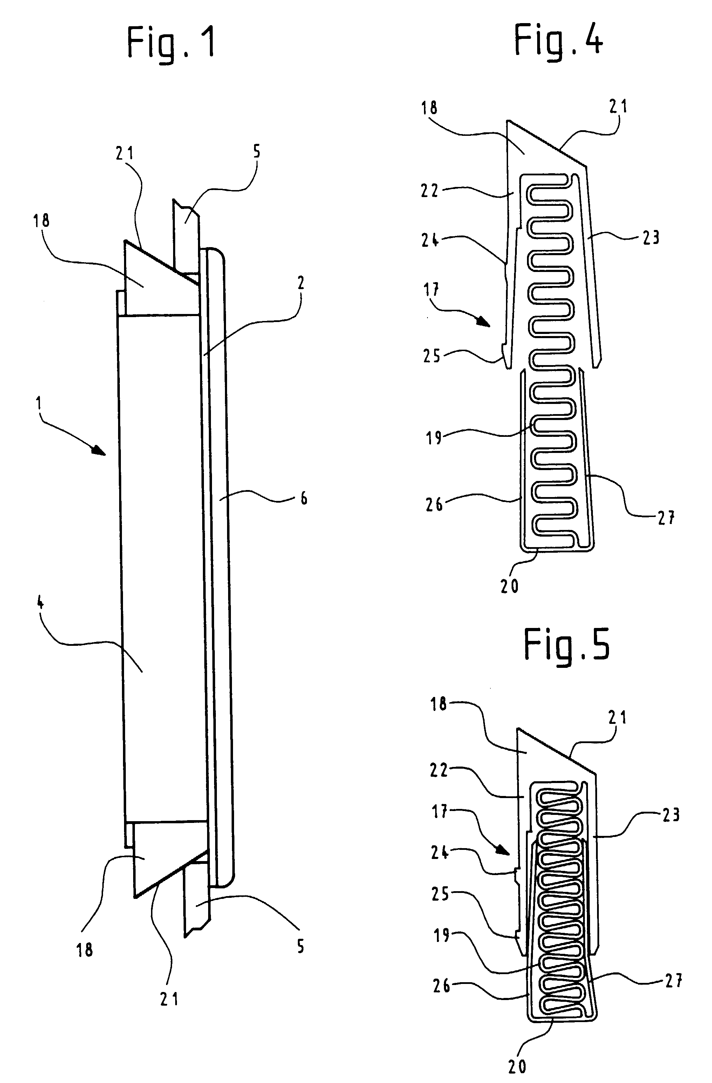

In den Fig. 1 bis 5 ist mit 1 ein Rahmen bezeichnet, der einen umlaufenden Flansch 2 und der an zwei parallelen Seiten je einen stegförmigen Rand 3 und an zwei parallelen Seiten je einen quaderförmigen Rand 4 aufweist. Die Ränder 3;4 werden von einer Ausnehmung einer Montageplatte 5 aufgenommen, so dass der umlaufende Flansch 2 die Ausnehmung überdeckt und frontseitig an der Montageplatte 5 aufliegt. Eine Deckplatte 6 steht beispielsweise in Klebeverbindung mit der Frontseite des Flansches 2. Auf der Innenseite der quaderförmigen Ränder 4 sind Stützen 7 und Gegenstützen 8 angeordnet, mittels denen eine Platine 9 mit elektronischen Elementen 10, mit Befehlselementen 11 wie beispielsweise Schalter und mit akustischen und optischen Meldeelementen 12, wie beispielsweise Leuchtdioden, Lautsprecher oder Bildschirme gehalten wird.

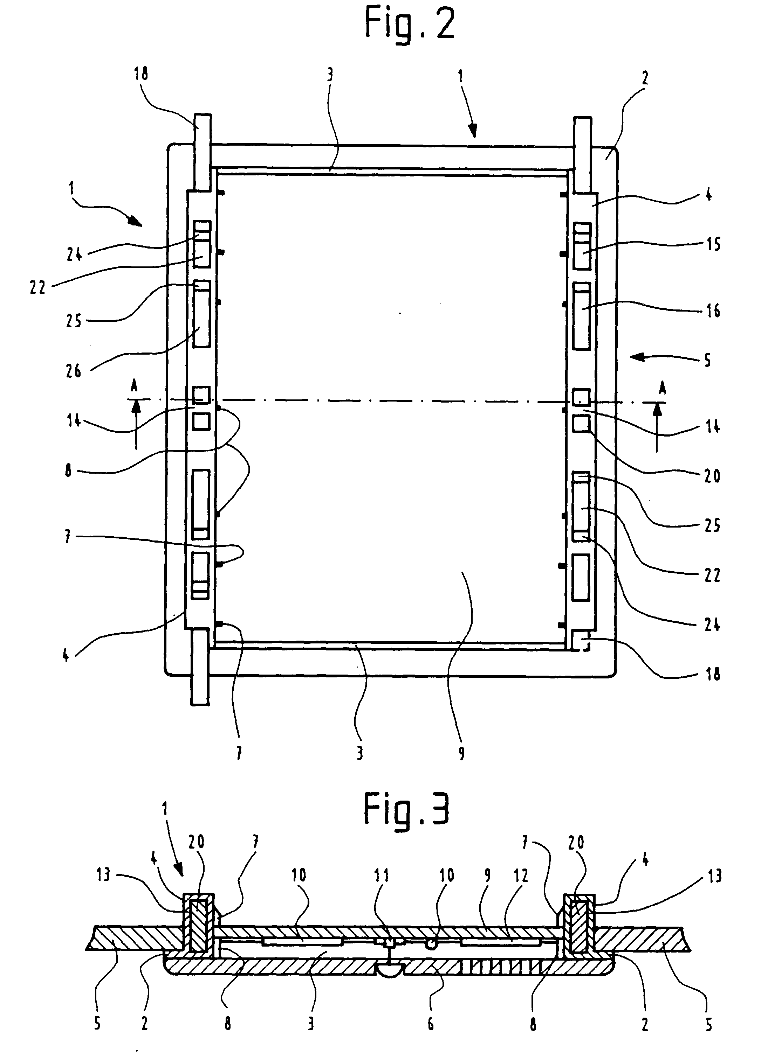

Der quaderförmige Rand 4 wird auf der gesamten Länge von einem Kanal 13 durchdrungen, der seitenmittig von einem Steg 14 unterbrochen wird und an der dem Flansch 2 abgewendeten Seite je Kanalhälfte eine erste Öffnung 15 und eine zweite Öffnung 16 aufweist. In je einer Kanalhälfte ist ein als Befestigungselement dienender Riegel 17 verschiebbar angeordnet. Ein mit 18 bezeichneter Kopfteil des Riegels 17 steht mittels einer Feder 19 mit einem Fussteil 20 in Verbindung, wobei sich der Fussteil 20 auf dem Steg 14 abstützt. Der mit einer Schräge 21 versehene Kopfteil 18 wird in der in Fig. 1 gezeigten Haltestellung des Riegels 17 mittels der von der Feder 19 ausgehenden Federkraft an der Schräge 21 gegen die Montageplatte 5 gepresst. Der Kopfteil 18 geht auf der einen Federseite in einen ersten Führungsfinger 22 und auf der anderen Federseite in einen zweiten Führungsfinger 23 über, wobei der der Schräge 21 gegenüberliegende erste Führungsfinger 22 eine erste Riegelnocke 24 und eine zweite Riegelnocke 25 aufweist. Wird der Riegel 17 von der in der Fig. 2 mit ausgezogenem Linienzug gezeigten Grundstellung in die in Fig. 2 mit unterbrochenem Linienzug gezeigte Montagestellung gebracht, so schieben sich die Führungsfinger 22;23 über einen ersten Gleitfinger 26 beziehungsweise über einen zweiten Gleitfinger 27, die je Federseite angeordnet sind und am Fussteil 20 enden. Ausserdem verhindern die Gleitfinger 26;27 seitliches Ausknicken der Feder 19. In der Grundstellung des Riegels 17 verrastet die zweite Riegelnocke 25 entgegen der Federkraft mit der zweiten Öffnung 16, die erste Riegelnocke taucht dabei frei in die erste Öffnung 15 ein. In der Montagestellung des Riegels 17 verrastet die erste Riegelnocke 24 entgegen der Federkraft mit der zweiten Öffnung 16, die zweite Riegelnocke 25 taucht dabei frei in die zweite Öffnung 16 ein. Damit der aus elastischem Kunststoff bestehende einstückige Riegel 17 von der Montagestellung in die Haltestellung oder Grundstellung springt, genügt ein die Verrastung lösender leichter Druck auf den ersten Führungsfinger 22.

## Patentansprüche

1. Tableau bestehend aus einer Deckplatte (6) und einem aus Rändern (3;4) und einem umlaufenden Flansch (2) gebildeten Rahmen (1), wobei die Ränder (3;4) an der Innenseite Stützen (7) und Gegenstützen (8) zum Tragen einer Platine (9) aufweisen und wobei die Ränder (3;4) von einer Ausnehmung einer Montageplatte (5) aufgenommen werden und der umlaufende Flansch (2) die Ausnehmung überdeckt und frontseitig an der Montageplatte (5) aufliegt,
dadurch gekennzeichnet,
dass an zwei parallelen Seiten des Rahmens (1) je ein stegförmiger Rand (3) und an zwei parallelen Seiten des Rahmens (1) je ein von einem Kanal (13) durchdrungener quaderförmiger Rand (4) vorgesehen ist, wobei der Kanal (13) seitenmittig von einem Steg (14) unterbrochen ist und wobei in je einer Kanalhälfte ein als Befestigungselement dienender Riegel (17) verschiebbar angeordnet ist, und daß der Riegel (17) einen mit einer Schräge (21) versehenen Kopfteil (18) aufweist, der an der Schräge (21) gegen die Montageplatte (5) gepresst wird.

2. Tableau nach Anspruch 1,
dadurch gekennzeichnet,
dass der quaderförmige Rand (4) an der dem Flansch (2) abgewendeten Seite je Kanalhälfte eine erste Öffnung (15) und eine zweite Öffnung (16) aufweist.

3. Tableau nach Anspruch 1,
dadurch gekennzeichnet,
dass der Riegel (17) eine Feder (19) aufweist, die den Kopfteil (18) mit einem Fussteil (20) verbindet.

4. Tableau nach Anspruch 3,
dadurch gekennzeichnet,
dass der Kopfteil (18) auf der einen Federseite in einen ersten Führungsfinger (22) übergeht und auf der anderen Federseite in einen zweiten Führungsfinger (23) übergeht, wobei der der Schräge (21) des Kopfteils (18) gegenüberliegende erste Führungsfinger (22) eine erste Riegelnocke (24) und eine zweite Riegelnocke (25) aufweist, die mit den Öffnungen (15;16) des quaderförmigen Randes (4) verrasten.

5. Tableau nach Anspruch 3,
dadurch gekennzeichnet,
dass sich der Fussteil (20) auf dem Steg (14) des quaderförmigen Randes (4) abstützt und auf der einen Federseite einen ersten Gleitfinger (26) und auf der anderen Federseite einen zweiten Gleitfinger (27) aufweist, auf denen die Führungsfinger (22;23) gleiten.

6. Tableau nach einem der vorhergehenden Ansprüche,
dadurch gekennzeichnet,
dass der Riegel (17) einstückig ist und aus elastischem Kunststoff besteht.

## Revendications

1. Tableau indicateur comprenant une plaque de recouvrement (6) et un cadre (1) formé de bords (3 ; 4) et d'une bride (2) faisant tout le tour, étant précisé que les bords (3 ; 4) comportent, sur le côté intérieur, des appuis (7) et des contre-appuis (8) destinés à porter une platine (9) et sont logés dans un creux d'une plaque de montage (5), et que la bride (2) qui fait tout le tour couvre le creux et est posée, côté frontal, contre la plaque de montage (5),
caractérisé en ce qu'il est prévu, sur deux côtés parallèles du cadre (1), des bords respectifs en forme de nervures (3) et, sur deux côtés parallèles du cadre (1), des bords respectifs en forme de parallélipipèdes (4) traversés chacun par un canal (13), étant précisé que ce canal (13) est interrompu, au milieu des côtés, par une nervure (14) et qu'un verrou mobile (17) servant d'élément de fixation est disposé dans chaque moitié de canal, et en ce que le verrou (17) comporte un élément supérieur (18) pourvu d'un biseau (21), qui est pressé au niveau de celui-ci contre la plaque de montage (5).

2. Tableau indicateur selon la revendication 1, caractérisé en ce que le bord en forme de parallélipipède (4) comporte, sur le côté opposé à la bride (2), sur chaque moitié du canal, une première ouverture (15) et une seconde ouverture (16).

3. Tableau indicateur selon la revendication 1, caractérisé en ce que le verrou (17) comporte un ressort (19) qui relie l'élément supérieur (18) à un élément inférieur (20).

4. Tableau indicateur selon la revendication 3, caractérisé en ce que l'élément supérieur (18) se prolonge par un premier doigt de guidage (22), d'un côté du ressort, et par un second doigt de guidage (23), de l'autre côté du ressort, le premier doigt de guidage (22) opposé au biseau (21) de l'élément supérieur (18) comportant une première saillie de verrou (24) et une seconde saillie de verrou (25) qui s'enclenchent avec les ouvertures (15 ; 16) du bord en forme de parallélipipède (4).

5. Tableau indicateur selon la revendication 3, caractérisé en ce que l'élément inférieur (20) s'appuie sur la nervure (14) du bord en forme de parallélipipède (4) et comporte un premier doigt de glissement (26), d'un côté du ressort, et un second doigt de glissement (27), de l'autre côté du ressort, sur lesquels glissent les doigts de guidage (22 ; 23).

6. Tableau indicateur selon l'une des revendications précédentes, caractérisé en ce que le verrou (17) est réalisé d'une seule pièce et se compose d'une matière plastique élastique.

## Claims

1. Panel consisting of a cover plate (6) and a frame (1) formed of rims (3; 4) and an encircling flange (2), wherein the rims (3; 4) at the inward side display supports (7) and countersupports (8) for carrying a plate (9) and wherein the rims (3; 4) are received by a recess of a mounting plate (5) and the encircling flange (2) covers the recess and rests frontally on the mounting plate (5), characterised thereby, that a respective web-shaped rim (3) is provided at each of two parallel sides of the frame (1) and a respective parallelepipedonal rim (4) penetrated by a channel (13) is provided at each of two parallel sides of the frame (1), wherein the channel (13) is interrupted by a web (14) in the middle of a side and wherein a respective locking bar (17) serving as fastening element is arranged to be displaceable in each channel half, and that the bar (17) has a head part (18), which is provided with a sloping surface (21) and which is pressed at the sloping surface (21) against the mounting plate (5).

2. Panel according to claim 1, characterised thereby, that the parallelepipedonal rim (4) at the side remote from the flange (2) displays a first opening (15) and a second opening (16) for each channel half.

3. Panel according to claim 1, characterised thereby, that the locking bar (17) displays a spring (19), which connects the head part (18) with a foot part (20).

4. Panel according to claim 3, characaterised thereby, that the head part (18) on the one spring side passes over into a first guide finger (22) and on the other spring side passes over into a second guide finger (23), wherein the first guide finger (22) lies opposite the sloping surface (21) of the head part (18) and displays a first locking dog (24) and a second locking dog (25), which each detent with the openings (15; 16) of the parallelepipedonal rim (4).

5. Panel according to claim 3, characterised thereby, that the foot part (20) bears on the web (14) of the parallelepipedonal rim (4) and on the one spring side displays a first slide finger (26) and on the other spring side displays a second slide finger (27), on which slide fingers the guide fingers (22; 23) slide.

6. Panel according to one of the preceding claims, characterised thereby, that the locking bar (17) is in one piece and consists of elastic synthetic material.
